# EUROPEAN PATENT SPECIFICATION

(11) **EP 3 606 150 B1**
(45) Date of publication and mention of the grant of the patent: **17.06.2026**
(21) Application number: 18770703.9
(22) Date of filing: 08.02.2018
(51) Int. Cl.: H04W 80/02, H04W 4/20, H04W 80/10

(54) **DATA TRANSMISSION METHOD, SENDING-END DEVICE AND RECEIVING-END DEVICE**
DATENÜBERTRAGUNGSVERFAHREN, SENDESEITIGE VORRICHTUNG UND EMPFANGSSEITIGE VORRICHTUNG
PROCÉDÉ DE TRANSMISSION DE DONNÉES, TERMINAL CÔTÉ ENVOI, ET DISPOSITIF CÔTÉ RÉCEPTION

(30) Priority: 24.03.2017 CN 201710192161
(43) Date of publication of application: 05.02.2020
(73) Proprietor: Vivo Mobile Communication Co., Ltd., Dongguan, Guangdong 523860 (CN)
(72) Inventor: WU, Yumin, Dongguan Guangdong 523860 (CN)
(74) Representative: Conti, Marco
(86) International application number: PCT/CN2018/075726
(87) International publication number: WO 2018/171354

(56) References cited:
- WO-A1-2014/181152
- WO-A1-2015/018653
- WO-A1-2016/172521
- CN-A- 104 303 553
- CN-A- 104 869 666
- CN-A- 106 488 569
- ERICSSON: "QoS framework for NR", vol. RAN WG2, no. Athens, Greece; 20170213 - 20170217, 3 February 2017 (2017-02-03), XP051223019, Retrieved from the Internet <URL:http://www.3gpp.org/ftp/tsg_ran/WG2_RL2/TSGR2_97/Docs/>
- ZTE: "Further discussion on the new UP protocol layer for QoS", vol. RAN WG2, no. Athens, Greece; 20170213 - 20170217, 12 February 2017 (2017-02-12), XP051211831, Retrieved from the Internet <URL:http://www.3gpp.org/ftp/Meetings_3GPP_SYNC/RAN2/Docs/>
- ZTE: "Consideration on the impact of QoS on NR UP", vol. RAN WG2, no. Kaohsiung; 20161010 - 20161014, 30 September 2016 (2016-09-30), XP051161658, Retrieved from the Internet <URL:http://www.3gpp.org/ftp/tsg_ran/WG2_RL2/TSGR2_95bis/Docs/>
- HUAWEI: "TP for including PDAP layer", 3GPP TSG-RAN3 MEETING #95 R3-170732, 7 February 2017 (2017-02-07), XP051224438

## Description

### TECHNICAL FIELD

The present disclosure relates to the field of communications technologies, and in particular, to a data transmission method, a transmitting end device and a receiving end device.

### BACKGROUND

At present, the fifth-generation (5G) mobile communication system introduces a network-side indication mechanism of Quality-of-Service (QoS). Therefore, it is required to join in the process of transmitting uplink data and downlink data. The QoS indication information of the IP data flow of the terminal (such as the flow channel identifier flow ID). The flow ID is usually carried in the packet header of the Packet Data Adaption Protocol (PDAP) layer. For example, when performing the uplink data transmission, the terminal UE needs to carry the flow ID in the PDAP layer header of the uplink data, so as to indicate to the network side which data stream of the UE the uplink data belongs to at the network side. After the uplink data is received by the network side, subsequent data may be sent in the corresponding network side data stream channel according to the indication of the flow ID.

The process of transmitting the reflective QoS information may be: taking the network side device as an example, when the network side device sends a downlink packet of a specific service, the corresponding transmission channel may not be pre-configured for the UE side, so the flow ID may be carried in the downlink data packet sent to the UE. After receiving the downlink data packet, the UE may send the uplink data of the downlink data packet with the flow ID and send the data via the DRB corresponding to the downlink data. After receiving the uplink data of the UE, the network side device may send the data through the corresponding network side data flow channel according to the indication of the flow ID.

Due to the introduction of the PDAP layer, when sending the data, the transmitting end device needs to carry additional attribute information related to the data, such as flow ID. Therefore, after the introduction of the PDAP layer, the data transmission method in the related art adds additional signaling overheads.

Document "QoS framework for NR" from Ericsson discusses the remaining open issue related to the NR QoS framework to introduce a simplest way to allow the eNB to update the mapping by redirecting the packets of a DL flow onto a different DRB. Document "Further discussion on the new UP protocol layer for QoS" from ZTE provides a further analysis for two important features, reflective QoS and flow remap/mobility in the new QoS framework. Document "WO2015018653A1" discussed a method for efficiently performing a Se NB change for a UE in dual connectivity. When reconfiguring a data radio bearer going via the Se NB to another target base station, the UE may compile a PDCP status report comprising status information for all of the data radio bearer going via the Se NB, accompanied respectively by a radio bearer ID to identify the radio bearer to which the status report information pertains. Further, the PDCP status report is directly transmitted by the UE to the Me NB to avoid the backhaul delay between the Se NB and the Me NB; this may be done by using a signaling radio bearer (e.g. RRC message), or data radio bearer to the Me NB (e.g. PDCP control PDU), or by using a physical channel transmission to the Me NB (e.g. MAC CE).

### SUMMARY

In view of this, a data transmission method, a transmitting end device and a receiving end device are provided in the embodiments of the present disclosure.

The scope of the present invention is determined only by the scope of the appended claims. More precisely, in one aspect, the present invention provides a data transmission method according to claim 1 and further detailed in the dependent claims referring back to this claim. A corresponding transmitting end device is provided in claim 5.

On the other hand, the present invention provides a data transmission method according to claim 3 and further detailed in the dependent claims referring back to this claim. A corresponding receiving end device is provided in claim 7.

### BRIEF DESCRIPTION OF THE DRAWINGS

In order to make the technical solutions of the present disclosure more clearly, the drawings in the embodiments of the present disclosure will be described hereinafter in a simple manner. Obviously, the following drawings merely relate to a part of the embodiments of the present disclosure. A person skilled in the art may, without any creative effort, obtain the other drawings based on these drawings.
Fig.1 is a flow chart of a data transmission method in some embodiments of the present disclosure;
Fig.2 is a schematic view showing a structure of data with a header including a first field in some embodiments of the present disclosure;
Fig.3 is a schematic view showing a structure of data with a header including a second field in some embodiments of the present disclosure;
Fig.4 is a schematic view showing a structure of data with a header including a third field in some embodiments of the present disclosure;
Fig.5 is a schematic view showing a structure of data with a header including a fourth field in some embodiments of the present disclosure;
Fig.6 is a schematic view showing a structure of data with a header including a fifth field in some embodiments of the present disclosure;
Fig.7 is a schematic view of a transmitting end device in some embodiments of the present disclosure;
Fig.8 is a flow chart of another data transmission method in some embodiments of the present disclosure;
Fig.9 is a schematic view of a receiving end device in some embodiments of the present disclosure;
Fig.10 is a schematic view of a network side device in some embodiments of the present disclosure;
Fig.11 is a schematic view of a terminal device in some embodiments of the present disclosure; and
Fig.12 is a schematic view of a terminal device in some embodiments of the present disclosure.

### DETAILED DESCRIPTION

The present disclosure will be described hereinafter in a clear and complete manner in conjunction with the drawings and embodiments. Obviously, scope of the invention is defined by the scope of the appended claims.

Firstly, it is noted that, according to the data transmission method in some embodiments of the present disclosure, a PDAP layer of the transmitted data is processed, so that the data does not carry a data transmission channel identifier corresponding to a corresponding data transmission channel in the PDAP layer, and the data is sent via the DRB corresponding to the corresponding data transmission channel, thereby reducing the additional attribute information related to the data in the transmitted data and saving the signaling overhead.

The disclosure is described below by some embodiments.

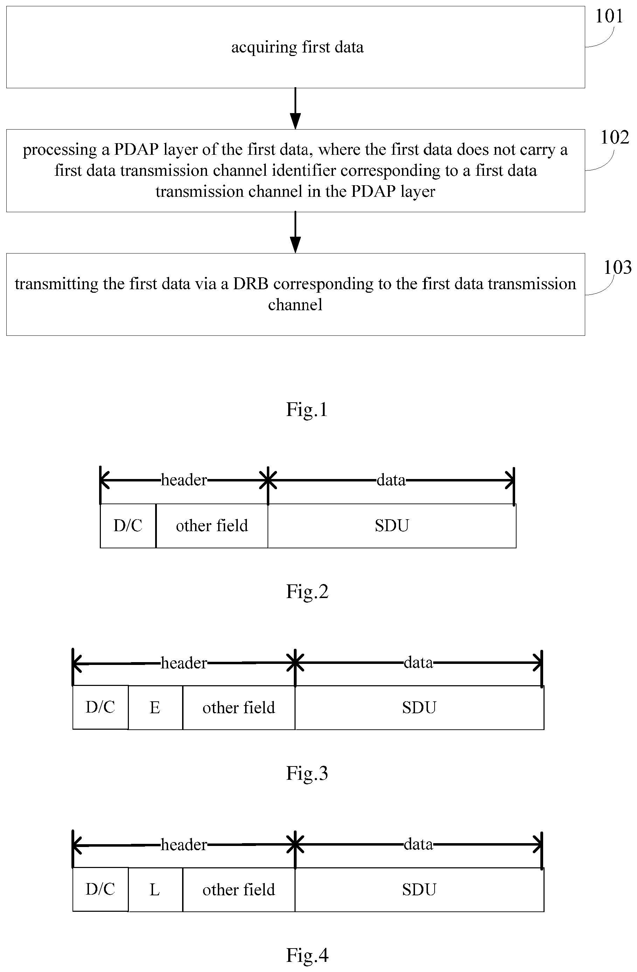

As shown in Fig.1, a data transmission method is provided in some embodiments of the present disclosure, which is applied to a transmitting end device, and includes the following steps 101 to 103, which are described in detail below.

Step 101: acquiring first data.

The transmitting end device may be a network side device or a terminal. When the transmitting end device is a network device, the first data acquired in this step is downlink data. When the transmitting end device is a terminal, the first data acquired in this step is uplink data.

Step 102: processing a PDAP layer of the first data, where the first data does not carry a first data transmission channel identifier corresponding to a first data transmission channel in the PDAP layer.

The transmitting end device processes the PDAP layer of the first data according to the pre-configured configuration information. Optionally, the transmitting end device may process the PDAP layer of the first data according to its own conditions. The pre-configured configuration information may indicate one or more of: one data transmission channel corresponding to one data radio bearer (DRB), a negligible data transmission channel and a data transmission channel negligible in a plurality of data transmission channels, etc. The pre-configured configuration information may be configured by the network side or stipulated by the protocol. When the first data is a data stream, the corresponding data transmission channel is a stream channel, and a data transmission channel identifier corresponding to the data transmission channel is a stream channel identifier.

Step 103: transmitting the first data via a DRB corresponding to the first data transmission channel.

The DRB corresponds to at least one data transmission channel, and the first data transmission channel is any one of the at least one data transmission channel. The reason for limiting the first data transmission channel to one is that the first data does not carry in the PDAP layer the first data transmission channel identifier corresponding to the first data transmission channel, if the first data transmission channel includes two or more data transmission channels, the first data may not carry in the PDAP layer two or more data transmission channel identifiers. Therefore, after receiving the first data, the receiving end device may not recognize the data transmission channel matching the first data. As a result, the transmission of subsequent data may be affected.

In this way, according to the data transmission method in some embodiments of the present disclosure, the PDAP layer of the transmitted data is processed based on the configuration, so that the data may not carry in the PDAP layer the data transmission channel identifier corresponding to the corresponding stream channel, and data is sent via the corresponding data transmission channel, thereby reducing the additional attribute information related to the data in the transmitted data and saving the signaling overhead.

In addition, according to the data transmission method in some embodiments of the present disclosure, in addition to the data not carrying the data transmission channel identifier, the data carrying the data transmission channel identifier, such as the signaling for reflective QoS information, may also be sent. Therefore, the data transmission method in some embodiments of the present disclosure may further include:

transmitting, via the DRB, second data carrying a data transmission channel identifier corresponding to another data transmission channel.

The second data includes, for example, a signaling for reflective QoS information. The another data transmission channel is a data transmission channel other than the first data transmission channel of a plurality of data transmission channels corresponding to the DRB. In this way, after receiving the second data, the receiving end device may determine the data transmission channel corresponding to the DRB via which the second data is sent, according to the data transmission channel identifier carried in the second data. The embodiment does not form part of the present invention but is an example useful for the understanding of the invention.

In some embodiments of the present disclosure, in order to facilitate the receiving end device to learn whether the first data carries the first data transmission channel identifier, the first data may carry indication information for an indication. Specifically, in the case that the first data transmission channel identifier is in a PDAP layer header, the first data may carry first indication information indicating that the first data does not carry the PDAP layer header, the embodiment does not form part of the present invention but is an example useful for the understanding of the invention, or in the case that the first data transmission channel identifier is not in a PDAP layer header, the first data may carry second indication information indicating that the first data does not carry the first data transmission channel identifier or, according to the claimed invention, does not carry the PDAP layer header. In this way, through the indication of the first or second indication information, the receiving end device may learn whether the first data carries the first flow channel identifier.

For a better understanding of the present disclosure, the data transmission process in some embodiments of the present disclosure will be described below.

In some embodiments of the present disclosure, the transmitting end device is a UE, which corresponds to the case of not carry a flow channel identifier in the PDAP layer and has no reflective QoS information that reflects the QoS information. The network side configures a certain DRB (e.g., DRB_1) of the UE to correspond to only one flow ID (e.g., flow_1), and the network side indicates or the protocol stipulates that, in the case that one DRB corresponds to one flow ID, the UE can ignore the flow ID.

In this case, the data transmission process of the UE is: first, acquiring uplink data 1; then, according to the network side configuration information, i.e., the DRB_1 of the UE only corresponds to the flow_1, and the PDAP layer of the uplink data 1 is processed, and the uplink data 1 does not carry the flow_1 in the PDAP layer; then, the uplink data 1 is sent via the DRB_1. After receiving the uplink data sent by the UE, the network side device may send the uplink data from the DRB_1 via the flow_1 of the network side according to the network side configuration information.

In addition, the uplink data 1 may also carry indication information indicating that the uplink data 1 does not carry the flow_1, so as to enable the network side device to learn that the uplink data 1 does not carry the flow_1.

Some embodiments of the present disclosure are directed to the case of no reflective QoS, but may also have the case of reflective QoS.

In some embodiments of the present disclosure, the transmitting end device is a UE, which corresponds to the case of not carry the flow channel identifier in the PDAP layer but have a reflective QoS. The network side configures a certain DRB (e.g., DRB_1) of the UE to correspond to only one flow ID (e.g., flow_1), and the network side indicates or the protocol stipulates that, in the case that one DRB corresponds to one flow ID, the UE can ignore the flow ID.

In this case, the data transmission process of the UE is: first, acquiring the uplink data 2, and receiving the downlink reflective QoS in the DRB_1, corresponding to the flow_2; and then processing the PDAP layer of the uplink data 2 according to the network side configuration information, where the uplink data 2 does not carry flow_1 in the PDAP layer but the uplink data 3 corresponding to the reflective QoS carries the flow_2; then, sending the uplink data 2 and 3 via the DRB_1. After the network side device receives the uplink data sent by the UE, if the uplink data from the DRB_1 does not carry the flow ID, the uplink data may be sent through the flow_1 of the network side according to the network side configuration information.

Some embodiments of the present disclosure are directed to the case where the network side configures one DRB of the UE to correspond to only one flow ID, but the network side may also configure one DRB of the UE to correspond to a plurality of flow IDs.

In some embodiments of the present disclosure, the transmitting end device is a UE, and the network side configures a certain DRB (e.g., DRB_1) of the UE to correspond to a plurality of flow IDs (e.g., flow_1, flow_2, and flow_3), and the network side indicates a negligible flow ID. (e.g., flow_1).

In this case, the data transmission process of the UE is: first, acquiring uplink data 4 for flow_1 sent by the uplink; and then processing the PDAP layer of the uplink data 4 according to the network side configuration information, where the uplink data 4 is not carried in the PDAP layer. Flow_1; then, sending the uplink data 4 via the DRB_1. After the network side device receives the uplink data sent by the UE, if the uplink data from the DRB_1 does not carry the flow ID, the uplink data may be sent via the flow_1 of the network side according to the network side configuration information.

It should be noted that some embodiments of the present disclosure are described for example that the transmitting end device is a UE, but the transmitting end device may also be a network-side device in the actual application and has substantially the same data transmission process, so the details thereof are omitted herein.

The above embodiment describes a data transmission method where the data transmission channel identifier is not carried by the transmitted data, and some additional processes of the PDAP layer processing will be described below.

In some embodiments of the present disclosure, when the PDAP layer of the first data is processed, a header of the first data may include a first field configured to indicate that the first data is a data packet or a control packet.

The first field is usually added with bit information to indicate that the first data is a data packet or a control packet.

For example, referring to Fig.2 which is a schematic view showing a structure of data with a header including a first field in some embodiments of the present disclosure, the first field is a "D/C" field and occupies 1 bit. As stipulated by the protocol, when the transmitting end device sends the data, if the data is a data packet, a bit value of the "D/C" field may be set to 0; if the data is a control packet, the bit value of the "D/C" field may be set to 1. After receiving the data, the receiving end device may determine whether the data is a data packet or a control packet according to the setting of the "D/C" field.

In some embodiments of the present disclosure, if the header of the first data has a first field and the first field indicates that the first data is a data packet, in the case that the PDAP layer of the first data is processed, the header of the first data includes a second field configured to indicate a length of the data transmission channel identifier corresponding to the data transmission channel, a format of the header of the first data and/or whether the header of the first data has an extended functional field.

Bit information for indication is usually added to the second field.

For example, referring to Fig.3 which is a schematic view showing a structure of data with a header including a second field in some embodiments of the present disclosure, the second field is an "E" field, which may occupy one or more bits. As stipulated by the protocol, different values in the "E" field may represent different extension types. For example, a bit value in the E field indicates a length of the flow ID, i.e., when the bit value is "0", the length of the flow ID is 6; when the bit value is 1, the length of the flow ID is 8. A bit value in the "E" field may indicate the format of the header of the data, that is, a header format with a length of 8 is adopted when the bit value is "0", and a header format with a length of 16 is used when the bit value is "1". A bit value in the "E" field indicates whether the header of the data has an extended functional field, that is, when the bit value is "0", there is only the "flow ID indication" functional field, and when the bit value is "1", in addition to the "flow ID indication", additional functional fields, such as "IP address", may be added. It should be noted that these bits can be combined according to requirements. After the receiving end device receives the data and determines that the data is a data packet according to the setting of the "D/C" field, the extension type of the packet may be determined according to the value of the "E" field.

In some embodiments of the present disclosure, if there is a first field in the header of the first data and the first field indicates that the first data is a data packet, when the PDAP layer of the first data is processed, the header of the first data includes a third field configured to indicate a length of a data filed filed of the first data.

The third field is usually added with bit information to indicate a length of the data field field in the first data.

For example, referring to Fig.4 which is a schematic view showing a structure of data with a header including a third field in some embodiments of the present disclosure, the third field is an "L" field, which may occupy one or more bits. As stipulated by the protocol, the value of the "L" field may indicate a length of the data field portion (i.e., the service data unit SDU) in the data packet. After the receiving end device receives the data and determines that the data is a data packet according to the setting of the "D/C" field, a length of the SDU in the data packet may be determined according to the value of the "L" field.

In some embodiments of the present disclosure, if there is a first field in the header of the first data and the first field indicates that the first data is a control packet, when the PDAP layer of the first data is processed, the header of the first data includes a fourth field configured to indicate a control packet type of the first data and/or whether the header of the first data has an extended functional field.

Bit information for indication is usually added to the fourth field.

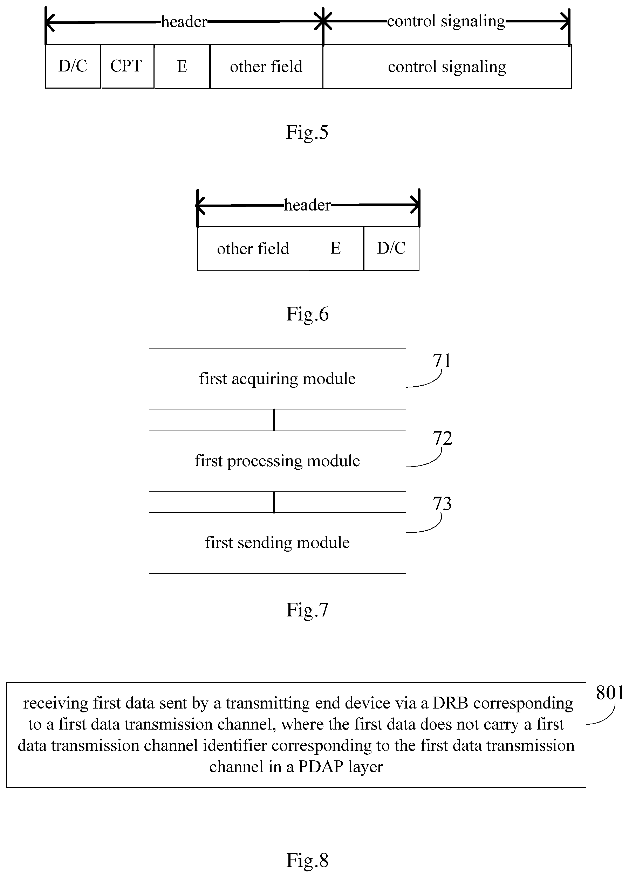

For example, referring to Fig.5 which is a schematic view showing a structure of data with a header including a fourth field in some embodiments of the present disclosure, the fourth field is a "CPT (Control PDU Type)" field and an "E" field, where both the "CPT" field and the "E" field may occupy one or more bits. As stipulated by the protocol, the value of the "CPT" field may indicate the control packet type of the data. For example, the value of "0" indicates requesting control packet, and the value is of "1" indicates reflective control packet. The value of the "E" field indicates whether the header of the data has an extended functional field. For example, when the value is "0", there is only the "flow ID indication" functional field, and when the value is "1", in addition to the "flow ID indication", additional functional fields, such as "IP address", may be added. After receiving the data and determining that the data is the control packet according to the setting of the D/C field, the type of the control packet and whether the header has an extended functional field may be determined based on the values of the "CPT" field and "E" field. It should be noted that, in the actual application, only one of the "CPT" field and the "E" field may be added to the header of the control packet to indicate an extension type.

In some embodiments of the present disclosure, when the PDAP layer of the first data is processed, the header of the first data includes a fifth field configured to indicate a coding mode of control information in the first data.

Bit information is usually added to the fifth field, the coding mode may be: coding from a low bit to a high bit of a signaling carrying the control information, for example, coding from the end of the signaling carrying the control information to the beginning thereof.

For example, referring to Fig.6 which is a schematic view showing a structure of data with a header including a fifth field in some embodiments of the present disclosure, the fifth field is an "E" field, which may occupy one or more bits. As stipulated by the protocol, the value of the "E" field may indicate the coding mode of the control information in the data. For example, when the bit value of the "E" field is 1, it is indicated that the first coding bit of the signaling content is placed at the end of the signaling content when performing the signaling coding. For each field, the value coding is also from the end of the signaling to the beginning of the signaling. Thus, a 3-bit field with the value of "1" is encoded as (100), and the 3-bit field with the value of "3" is encoded as (110). However, in the coding mode of the related art, the 3-bit field with the value of "1" is (001), the 3-bit field with the value of "3" is (011), which is a coding mode from the beginning to the end, or referred to as a coding mode from MSB (Most Significant Bit) to LSB (Least Significant Bit).The receiving end device reads from the end of the signaling content when reading the signaling.

The data transmission method in some embodiments of the present disclosure is described hereinabove, and the corresponding transmitting end device will be further described below in conjunction with the embodiments and the drawings.

Referring to Fig.7, a transmitting end device is further provided in some embodiments of the present disclosure, including the following functional modules:
a first acquiring module 71, configured to acquire first data;
a first processing module 72, configured to process a Packet Data Adaption Protocol (PDAP) layer of the first data, where the first data does not carry a first data transmission channel identifier corresponding to a first data transmission channel in the PDAP layer; and
a first sending module 73, configured to transmit the first data via a Data Radio Bearer (DRB) corresponding to the first data transmission channel.

The DRB corresponds to at least one data transmission channel, and the first data transmission channel is any one of the at least one data transmission channel.

The transmitting end device further include:
a second sending module, configured to transmit, via the DRB, second data carrying a data transmission channel identifier corresponding to another data transmission channel, where the another data transmission channel is a data transmission channel other than the first data transmission channel of a plurality of data transmission channels corresponding to the DRB. The embodiment does not form part of the present invention but is an example useful for the understanding of the invention.

To be specific, the second data includes a signaling for reflective Quality-of-Service (QoS) information. The embodiment does not form part of the present invention but is an example useful for the understanding of the invention.

To be specific, in the case that the first data transmission channel identifier is in a PDAP layer header, the first data carries first indication information indicating that the first data does not carry the PDAP layer header, the embodiment does not form part of the present invention but is an example useful for the understanding of the invention; or

in the case that the first data transmission channel identifier is not in a PDAP layer header, the first data carries second indication information indicating that the first data does not carry the first data transmission channel identifier or does not carry the PDAP layer header.

To be specific, in the case that the PDAP layer of the first data is processed, a header of the first data includes a first field configured to indicate that the first data is a data packet or a control packet.

To be specific, in the case that a first field of the header of the first data indicates that the first data is a data packet, and when the PDAP layer of the first data is processed, the header of the first data includes a second field configured to indicate a length of the data transmission channel identifier corresponding to the data transmission channel, a format of the header of the first data and/or whether the header of the first data has an extended functional field.

To be specific, in the case that a first field of the header of the first data indicates that the first data is a data packet, and when the PDAP layer of the first data is processed, the header of the first data includes a third field configured to indicate a length of a data domain filed of the first data.

To be specific, in the case that a first field of the header of the first data indicates that the first data is a control packet, and when the PDAP layer of the first data is processed, the header of the first data includes a fourth field configured to indicate a control packet type of the first data and/or whether the header of the first data has an extended functional field.

To be specific, when the PDAP layer of the first data is processed, the header of the first data includes a fifth field configured to indicate a coding mode of control information in the first data.

To be specific, the coding mode is coding from a low bit to a high bit of a signaling carrying the control information.

According to the transmitting end device of present disclosure, a PDAP layer of the transmitted data is processed, so that the data does not carry a data transmission channel identifier corresponding to a corresponding data transmission channel in the PDAP layer, and the data is sent via the corresponding data transmission channel, thereby reducing the additional attribute information related to the data in the transmitted data and saving the signaling overhead.

The data transmission method in some embodiment of the present disclosure is described hereinabove from a transmitting end device side. The data transmission method in some embodiment of the present disclosure will be described below from a receiving end device side in connection with embodiments and drawings.

As shown in Fig.8, a data transmission method is further provided in some embodiments of the present disclosure, which is applied to a receiving end device and includes the following step 801, which is described in detail below.

Step 801: receiving first data sent by a transmitting end device via a Data Radio Bearer (DRB) corresponding to a first data transmission channel, where the first data does not carry a first data transmission channel identifier corresponding to the first data transmission channel in a Packet Data Adaption Protocol (PDAP) layer.

The receiving end device may be a network side device or a terminal. When the receiving end device is a network side device, the first data received in this step is uplink data. When the receiving end device is a terminal, the first data received in this step is downlink data. In this way, after receiving the first data, the receiving end device may learn that the first data does not carry the corresponding data transmission channel identifier.

According to the data transmission method in some embodiments of the present disclosure, by receiving the data which is sent by the transmitting end device and does not carry in the PDAP layer the data transmission channel identifier corresponding to the data transmission channel, it is able to determine the corresponding data transmission channel in the case that the transmitted data does not carry the data transmission channel identifier, thereby reducing the additional attribute information related to the data in the transmitted data and saving the signaling overhead.

Further, in some embodiments of the present disclosure, the data transmission method further includes:
determining, based on pre-configured configuration information, a data transmission channel corresponding to the DRB via which the first data is sent.

The pre-configured configuration information may indicate one or more of: one data transmission channel corresponding to one data radio bearer (DRB), a negligible data transmission channel and a data transmission channel negligible in a plurality of data transmission channels, etc. The pre-configured configuration information may be configured by the network side or stipulated by the protocol. The DRB corresponds to at least one data transmission channel, and the first data transmission channel is any one of the at least one data transmission channel.

Specifically, in some embodiments of the present disclosure, the data transmission method further includes:
receiving second data sent by the transmitting end device via the DRB, where the second data carries a data transmission channel identifier corresponding to another data transmission channel in the PDAP layer;
determining, based on the data transmission channel identifier carried in the second data, a data transmission channel corresponding to the DRB via which the second data is sent. The embodiment does not form part of the present invention but is an example useful for the understanding of the invention. The second data includes a signaling for reflective Quality-of-Service (QoS) information, and the another data transmission channel is a data transmission channel other than the first data transmission channel of a plurality of data transmission channels corresponding to the DRB. The embodiment does not form part of the present invention but is an example useful for the understanding of the invention.

In some embodiments of the present disclosure, in the case that the first data transmission channel identifier is in a PDAP layer header, the first data carries first indication information indicating that the first data does not carry the PDAP layer header, the embodiment does not form part of the present invention but is an example useful for the understanding of the invention; or
in the case that the first data transmission channel identifier is not in a PDAP layer header, the first data carries second indication information indicating that the first data does not carry the first data transmission channel identifier or does not carry the PDAP layer header.

In some embodiments of the present disclosure, a header of the first data includes a first field configured to indicate that the first data is a data packet or a control packet, and the method further includes:
determining, based on indication information in the first field, that the first data is a data packet or a control packet.

In some embodiments of the present disclosure, in the case that the first data is a data packet, the header of the first data includes a second field configured to indicate a length of the data transmission channel identifier corresponding to the data transmission channel, a format of the header of the first data and/or whether the header of the first data has an extended functional field, and the method further includes:
determining, based on indication information in the second field, the length of the data transmission channel identifier corresponding to the data transmission channel, the format of the header of the first data and/or whether the header of the first data has the extended functional field.

In some embodiments of the present disclosure, in the case that the first data is a data packet, the header of the first data includes a third field configured to indicate a length of a data domain filed of the first data, and the method further includes:
determining, based on indication information in the third field, the length of the data domain filed of the first data.

In some embodiments of the present disclosure, in the case that the first data is a control packet, the header of the first data includes a fourth field configured to indicate a control packet type of the first data and/or whether the header of the first data has an extended functional field, and the method further includes:
determining, based on indication information in the fourth field, the control packet type of the first data and/or whether the header of the first data has the extended functional field.

In some embodiments of the present disclosure, in the case that the header of the first data includes a fifth field configured to indicate a coding mode of control information in the first data, and the method further includes:
determining, based on indication information in the fifth field, the coding mode of the control information in the first data; and
reading the control information in the first data based on the coding mode.

Further, the coding mode is coding from a low bit to a high bit of a signaling carrying the control information.

The data transmission method of the receiving end device in some embodiments of the present disclosure is described hereinabove, and the corresponding receiving end device will be further described below in conjunction with the embodiments and the drawings.

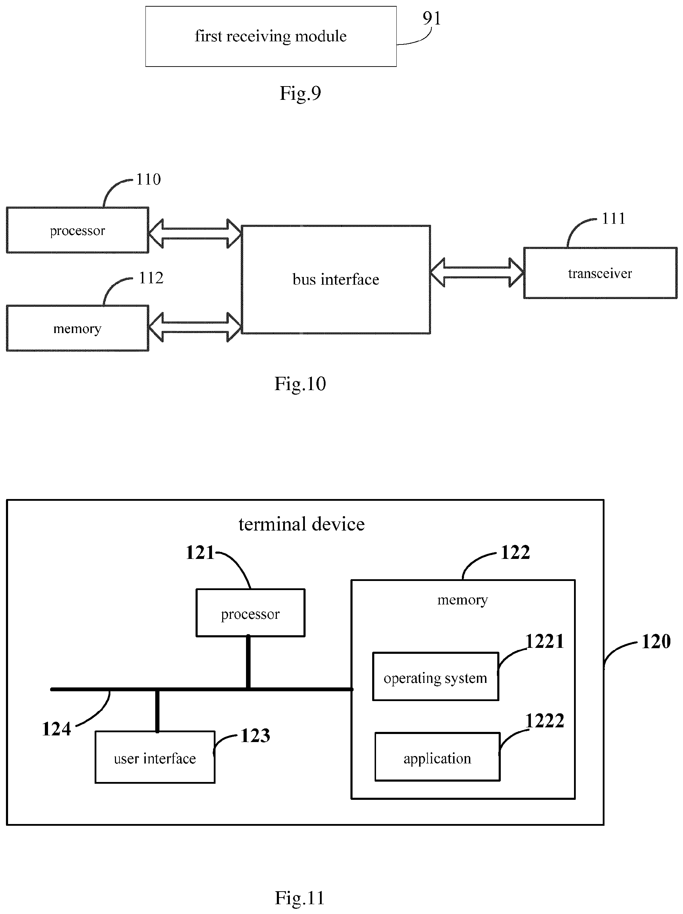

As shown in Fig.9, a receiving end device is further provided in some embodiments of the present disclosure, including the following functional modules:
a first receiving module 91, configured to receive first data sent by a transmitting end device via a Data Radio Bearer (DRB) corresponding to a first data transmission channel, where the first data does not carry a first data transmission channel identifier corresponding to the first data transmission channel in a Packet Data Adaption Protocol (PDAP) layer.

In some embodiments of the present disclosure, the receiving end device further includes:
a first determining module, configured to determine, based on pre-configured configuration information, a data transmission channel corresponding to the DRB via which the first data is sent.

To be specific, the DRB corresponds to at least one data transmission channel, and the first data transmission channel is any one of the at least one data transmission channel.

To be specific, the receiving end device further includes:
a second receiving module, configured to receive second data sent by the transmitting end device via the DRB, where the second data carries a data transmission channel identifier corresponding to another data transmission channel in the PDAP layer, the another data transmission channel is a data transmission channel other than the first data transmission channel of a plurality of data transmission channels corresponding to the DRB;
a second determining module, configured to determine, based on the data transmission channel identifier carried in the second data, a data transmission channel corresponding to the DRB via which the second data is sent. The embodiment does not form part of the present invention but is an example useful for the understanding of the invention.

To be specific, the second data includes a signaling for reflective Quality-of-Service (QoS) information. The embodiment does not form part of the present invention but is an example useful for the understanding of the invention.

To be specific, in the case that the first data transmission channel identifier is in a PDAP layer header, the first data carries first indication information indicating that the first data does not carry the PDAP layer header, the embodiment does not form part of the present invention but is an example useful for the understanding of the invention; or
in the case that the first data transmission channel identifier is not in a PDAP layer header, the first data carries second indication information indicating that the first data does not carry the first data transmission channel identifier or does not carry the PDAP layer header.

To be specific, a header of the first data includes a first field configured to indicate that the first data is a data packet or a control packet, and the device further includes:
a third determining module, configured to determine, based on indication information in the first field, that the first data is a data packet or a control packet.

To be specific, in the case that the first data is a data packet, the header of the first data includes a second field configured to indicate a length of the data transmission channel identifier corresponding to the data transmission channel, a format of the header of the first data and/or whether the header of the first data has an extended functional field, and the device further includes:
a fourth determining module, configured to determine, based on indication information in the second field, the length of the data transmission channel identifier corresponding to the data transmission channel, the format of the header of the first data and/or whether the header of the first data has the extended functional field.

To be specific, in the case that the first data is a data packet, the header of the first data includes a third field configured to indicate a length of a data domain filed of the first data, and the device further includes:
a fifth determining module, configured to determine, based on indication information in the third field, the length of the data domain filed of the first data.

To be specific, in the case that the first data is a control packet, the header of the first data includes a fourth field configured to indicate a control packet type of the first data and/or whether the header of the first data has an extended functional field, and the device further includes:
a sixth determining module, configured to determine, based on indication information in the fourth field, the control packet type of the first data and/or whether the header of the first data has the extended functional field.

To be specific, in the case that the header of the first data includes a fifth field configured to indicate a coding mode of control information in the first data, and the device further includes:
a seventh determining module, configured to determine, based on indication information in the fifth field, the coding mode of the control information in the first data; and
a reading module, configured to read the control information in the first data based on the coding mode.

To be specific, the coding mode is coding from a low bit to a high bit of a signaling carrying the control information.

According to the receiving end device in some embodiments of the present disclosure, by receiving the data which is sent by the transmitting end device and does not carry in the PDAP layer the data transmission channel identifier corresponding to the data transmission channel, it is able to determine the corresponding data transmission channel in the case that the transmitted data does not carry the data transmission channel identifier, thereby reducing the additional attribute information related to the data in the transmitted data and saving the signaling overhead.

In order to achieve the above objective, as shown in Fig.10, a network side device is further provided in some embodiments of the present disclosure, where the network side device includes: a processor 110, a memory 112 connected to the processor 110 through a bus interface, and a transceiver 111 connected to the processor 110 via a bus interface. The memory 112 is configured to store programs and data used by the processor 110 when performing operations; the transceiver 111 is configured to transmit data information or pilot, and also receives an uplink control channel. The processor 110 calls and executes the program and data stored in the memory 112.

When the network side device is a transmitting end device, the processor 110 is configured to read a program in the memory 112 to:
acquire first data; process a PDAP layer of the first data, where the first data does not carry a first data transmission channel identifier corresponding to a first data transmission channel in the PDAP layer; and transmit the first data via a DRB corresponding to the first data transmission channel.

To be specific, the DRB corresponds to at least one data transmission channel, and the first data transmission channel is any one of the at least one data transmission channel.

To be specific, the processor 110 is further configured to read a program in the memory 112 to: transmit, via the DRB, second data carrying a data transmission channel identifier corresponding to another data transmission channel, where the another data transmission channel is a data transmission channel other than the first data transmission channel of a plurality of data transmission channels corresponding to the DRB. The embodiment does not form part of the present invention but is an example useful for the understanding of the invention.

To be specific, the second data includes a signaling for reflective Quality-of-Service (QoS) information. The embodiment does not form part of the present invention but is an example useful for the understanding of the invention.

To be specific, in the case that the first data transmission channel identifier is in a PDAP layer header, the first data carries first indication information indicating that the first data does not carry the PDAP layer header, the embodiment does not form part of the present invention but is an example useful for the understanding of the invention; or in the case that the first data transmission channel identifier is not in a PDAP layer header, the first data carries second indication information indicating that the first data does not carry the first data transmission channel identifier or does not carry the PDAP layer header.

To be specific, in the case that the PDAP layer of the first data is processed, a header of the first data includes a first field configured to indicate that the first data is a data packet or a control packet.

To be specific, a first field of the header of the first data indicates that the first data is a data packet, and in the case that the PDAP layer of the first data is processed, the header of the first data includes a second field configured to indicate a length of the data transmission channel identifier corresponding to the data transmission channel, a format of the header of the first data and/or whether the header of the first data has an extended functional field.

To be specific, a first field of the header of the first data indicates that the first data is a data packet, and in the case that the PDAP layer of the first data is processed, the header of the first data includes a third field configured to indicate a length of a data domain filed of the first data.

To be specific, a first field of the header of the first data indicates that the first data is a control packet, and in the case that the PDAP layer of the first data is processed, the header of the first data includes a fourth field configured to indicate a control packet type of the first data and/or whether the header of the first data has an extended functional field.

To be specific, in the case that the PDAP layer of the first data is processed, the header of the first data includes a fifth field configured to indicate a coding mode of control information in the first data.

To be specific, the coding mode is coding from a low bit to a high bit of a signaling carrying the control information.

When the network side device is a receiving end device, the processor 110 is configured to read a program in the memory 112 to:
receive first data sent by a transmitting end device via a DRB corresponding to a first data transmission channel, where the first data does not carry a first data transmission channel identifier corresponding to the first data transmission channel in a PDAP layer.

To be specific, the processor 110 is further configured to read a program in the memory 112 to: determine, based on pre-configured configuration information, a data transmission channel corresponding to the DRB via which the first data is sent.

To be specific, the DRB corresponds to at least one data transmission channel, and the first data transmission channel is any one of the at least one data transmission channel.

To be specific, the processor 110 is further configured to read a program in the memory 112 to: receive second data sent by the transmitting end device via the DRB, where the second data carries a data transmission channel identifier corresponding to another data transmission channel in the PDAP layer, the another data transmission channel is a data transmission channel other than the first data transmission channel of a plurality of data transmission channels corresponding to the DRB; determine, based on the data transmission channel identifier carried in the second data, a data transmission channel corresponding to the DRB via which the second data is sent. The embodiment does not form part of the present invention but is an example useful for the understanding of the invention.

To be specific, the second data includes a signaling for reflective Quality-of-Service (QoS) information. The embodiment does not form part of the present invention but is an example useful for the understanding of the invention.

To be specific, in the case that the first data transmission channel identifier is in a PDAP layer header, the first data carries first indication information indicating that the first data does not carry the PDAP layer header, the embodiment does not form part of the present invention but is an example useful for the understanding of the invention; or in the case that the first data transmission channel identifier is not in a PDAP layer header, the first data carries second indication information indicating that the first data does not carry the first data transmission channel identifier or does not carry the PDAP layer header.

To be specific, a header of the first data includes a first field configured to indicate that the first data is a data packet or a control packet, and the processor 110 is further configured to read a program in the memory 112 to:
determine, based on indication information in the first field, that the first data is a data packet or a control packet.

To be specific, in the case that the first data is a data packet, the header of the first data includes a second field configured to indicate a length of the data transmission channel identifier corresponding to the data transmission channel, a format of the header of the first data and/or whether the header of the first data has an extended functional field, and the processor 110 is further configured to read a program in the memory 112 to:
determine, based on indication information in the second field, the length of the data transmission channel identifier corresponding to the data transmission channel, the format of the header of the first data and/or whether the header of the first data has the extended functional field.

To be specific, in the case that the first data is a data packet, the header of the first data includes a third field configured to indicate a length of a data domain filed of the first data, and the processor 110 is further configured to read a program in the memory 112 to:
determine, based on indication information in the third field, the length of the data domain filed of the first data.

To be specific, in the case that the first data is a control packet, the header of the first data includes a fourth field configured to indicate a control packet type of the first data and/or whether the header of the first data has an extended functional field, and the processor 110 is further configured to read a program in the memory 112 to:
determine, based on indication information in the fourth field, the control packet type of the first data and/or whether the header of the first data has the extended functional field.

To be specific, in the case that the header of the first data includes a fifth field configured to indicate a coding mode of control information in the first data, and the processor 110 is further configured to read a program in the memory 112 to:
determine, based on indication information in the fifth field, the coding mode of the control information in the first data; and
read the control information in the first data based on the coding mode.

To be specific, the coding mode is coding from a low bit to a high bit of a signaling carrying the control information.

The transceiver 111 is configured to receive and transmit data under the control of the processor 110.

As shown in Fig.10, the bus architecture may include any number of interconnected buses and bridges, specifically linked by one or more processors represented by processor 110 and various circuits of memory represented by memory 112. The bus architecture may also link various other circuits such as peripherals, voltage regulators, and power management circuits, which are well known in the art and, therefore, will not be further described herein. The bus interface provides an interface. Transceiver 111 can be a plurality of components, including a transmitter and a transceiver, providing means for communicating with various other devices on a transmission medium. The processor 110 is responsible for managing the bus architecture and general processing, and the memory 112 can store data used by the processor 110 in performing operations.

According to the network side device of present disclosure, a PDAP layer of the transmitted data is processed, so that the data does not carry a data transmission channel identifier corresponding to a corresponding data transmission channel in the PDAP layer, and the data is sent via the DRB corresponding to the corresponding data transmission channel, thereby reducing the additional attribute information related to the data in the transmitted data and saving the signaling overhead.

The network side device in some embodiments of the present disclosure is described hereinabove, and the corresponding terminal device will be further described below in conjunction with the embodiments and the drawings.

Fig.11 is a schematic view of a terminal device in some embodiments of the present disclosure. The terminal device shown in Fig.11 includes at least one processor 121, a memory 122, and a user interface 123. The various components in terminal device 120 are coupled together by a bus system 124. It will be appreciated that bus system 124 is used to effect connection communication between these components. In addition to the data bus, bus system 124 includes a power bus, a control bus, and a status signal bus. However, for clarity of description, various buses are labeled as bus system 124 in Fig.11.

The user interface 123 may include a display or a pointing device (e.g., a touchpad or a touch screen, etc.).

It will be appreciated that memory 122 in some embodiments of the present disclosure may be volatile memory or non-volatile memory, or may include both volatile and non-volatile memory. The non-volatile memory may be a read-only memory (ROM), a programmable read only memory (PROM), an erasable programmable read only memory (Erasable PROM, EPROM), or an electric Erase programmable read only memory (EEPROM) or flash memory. The volatile memory can be a Random Access Memory (RAM) that acts as an external cache. By way of example and not limitation, many forms of RAM are available, such as static random access memory (SRAM), dynamic random access memory (DRAM), synchronous dynamic random access memory (Synchronous DRAM). SDRAM), Double Data Rate Synchronous Dynamic Random Access Memory (DDRSDRAM), Enhanced Synchronous Dynamic Random Access Memory (ESDRAM), Synchronous Connection Dynamic Random Access Memory (SDRAM) and direct memory bus random access memory (DRRAM). The memory 122 of the systems and methods described herein is intended to comprise, without being limited to, these and any other suitable types of memory.

In some embodiments, memory 122 stores elements, executable modules or data structures, or a subset thereof, or their extended set: operating system 1221 and application 1222.

The operating system 1221 includes various system programs, such as a framework layer, a core library layer, a driver layer, and the like, for implementing various basic services and processing hardware-based tasks. The application 1222 includes various applications, such as a media player (Media Player), a browser, and the like, for implementing various application services. Programs that implement some of the embodiment methods of the present disclosure may be included in the application 1222.

In some embodiments of the present disclosure, the program or instruction stored in the memory 122 is specifically a program or an instruction stored in the application 1222. When the terminal device is a transmitting end device, the processor 121 is configured to:
acquire first data; process a PDAP layer of the first data, where the first data does not carry a first data transmission channel identifier corresponding to a first data transmission channel in the PDAP layer; and transmit the first data via a DRB corresponding to the first data transmission channel.

To be specific, the DRB corresponds to at least one data transmission channel, and the first data transmission channel is any one of the at least one data transmission channel.

To be specific, the processor 121 is further configured to: transmit, via the DRB, second data carrying a data transmission channel identifier corresponding to another data transmission channel, where the another data transmission channel is a data transmission channel other than the first data transmission channel of a plurality of data transmission channels corresponding to the DRB. The embodiment does not form part of the present invention but is an example useful for the understanding of the invention.

To be specific, the second data includes a signaling for reflective Quality-of-Service (QoS) information. The embodiment does not form part of the present invention but is an example useful for the understanding of the invention.

To be specific, in the case that the first data transmission channel identifier is in a PDAP layer header, the first data carries first indication information indicating that the first data does not carry the PDAP layer header, the embodiment does not form part of the present invention but is an example useful for the understanding of the invention; or in the case that the first data transmission channel identifier is not in a PDAP layer header, the first data carries second indication information indicating that the first data does not carry the first data transmission channel identifier or does not carry the PDAP layer header.

To be specific, in the case that the PDAP layer of the first data is processed, a header of the first data includes a first field configured to indicate that the first data is a data packet or a control packet.

To be specific, a first field of the header of the first data indicates that the first data is a data packet, and in the case that the PDAP layer of the first data is processed, the header of the first data includes a second field configured to indicate a length of the data transmission channel identifier corresponding to the data transmission channel, a format of the header of the first data and/or whether the header of the first data has an extended functional field.

To be specific, a first field of the header of the first data indicates that the first data is a data packet, and in the case that the PDAP layer of the first data is processed, the header of the first data includes a third field configured to indicate a length of a data domain filed of the first data.

To be specific, a first field of the header of the first data indicates that the first data is a control packet, and in the case that the PDAP layer of the first data is processed, the header of the first data includes a fourth field configured to indicate a control packet type of the first data and/or whether the header of the first data has an extended functional field.

To be specific, in the case that the PDAP layer of the first data is processed, the header of the first data includes a fifth field configured to indicate a coding mode of control information in the first data.

To be specific, the coding mode is coding from a low bit to a high bit of a signaling carrying the control information.

When the terminal device is a receiving end device, the processor 121 is configured to:
receive first data sent by a transmitting end device via a DRB corresponding to a first data transmission channel, where the first data does not carry a first data transmission channel identifier corresponding to the first data transmission channel in a PDAP layer.

To be specific, the processor 121 is further configured to: determine, based on pre-configured configuration information, a data transmission channel corresponding to the DRB via which the first data is sent.

To be specific, the DRB corresponds to at least one data transmission channel, and the first data transmission channel is any one of the at least one data transmission channel.

To be specific, the processor 121 is further configured to: receive second data sent by the transmitting end device via the DRB, where the second data carries a data transmission channel identifier corresponding to another data transmission channel in the PDAP layer, the another data transmission channel is a data transmission channel other than the first data transmission channel of a plurality of data transmission channels corresponding to the DRB; determine, based on the data transmission channel identifier carried in the second data, a data transmission channel corresponding to the DRB via which the second data is sent. The embodiment does not form part of the present invention but is an example useful for the understanding of the invention.

To be specific, the second data includes a signaling for reflective Quality-of-Service (QoS) information. The embodiment does not form part of the present invention but is an example useful for the understanding of the invention.

To be specific, in the case that the first data transmission channel identifier is in a PDAP layer header, the first data carries first indication information indicating that the first data does not carry the PDAP layer header, the embodiment does not form part of the present invention but is an example useful for the understanding of the invention; or in the case that the first data transmission channel identifier is not in a PDAP layer header, the first data carries second indication information indicating that the first data does not carry the first data transmission channel identifier or does not carry the PDAP layer header.

To be specific, a header of the first data includes a first field configured to indicate that the first data is a data packet or a control packet, and the processor 121 is further configured to:
determine, based on indication information in the first field, that the first data is a data packet or a control packet.

To be specific, in the case that the first data is a data packet, the header of the first data includes a second field configured to indicate a length of the data transmission channel identifier corresponding to the data transmission channel, a format of the header of the first data and/or whether the header of the first data has an extended functional field, and the processor 121 is further configured to:
determine, based on indication information in the second field, the length of the data transmission channel identifier corresponding to the data transmission channel, the format of the header of the first data and/or whether the header of the first data has the extended functional field.

To be specific, in the case that the first data is a data packet, the header of the first data includes a third field configured to indicate a length of a data domain filed of the first data, and the processor 121 is further configured to:
determine, based on indication information in the third field, the length of the data domain filed of the first data.

To be specific, in the case that the first data is a control packet, the header of the first data includes a fourth field configured to indicate a control packet type of the first data and/or whether the header of the first data has an extended functional field, and the processor 121 is further configured to:
determine, based on indication information in the fourth field, the control packet type of the first data and/or whether the header of the first data has the extended functional field.

To be specific, in the case that the header of the first data includes a fifth field configured to indicate a coding mode of control information in the first data, and the processor 121 is further configured to:
determine, based on indication information in the fifth field, the coding mode of the control information in the first data; and
read the control information in the first data based on the coding mode.

To be specific, the coding mode is coding from a low bit to a high bit of a signaling carrying the control information.

The methods disclosed in some embodiments of the present disclosure described above may be applied to the processor 121 or implemented by the processor 121. The processor 121 may be an integrated circuit chip with signal processing capabilities. In the implementation process, each step of the foregoing method may be completed by an integrated logic circuit of hardware in the processor 121 or an instruction in a form of software. The processor 121 may be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logical schematic views disclosed in some embodiments of the present disclosure may be implemented or performed. The general purpose processor may be a microprocessor or the processor or any conventional processor or the like. The steps of the method disclosed in connection with some embodiments of the present disclosure may be directly embodied by the hardware decoding processor, or by a combination of hardware and software modules in the decoding processor. The software module can be located in a conventional storage medium such as random access memory, flash memory, read only memory, programmable read only memory or electrically erasable programmable memory, registers, and the like. The storage medium is located in the memory 122, and the processor 121 reads the information in the memory 122 and completes the steps of the above method in combination with the hardware.

It will be appreciated that the embodiments described herein may be implemented in hardware, software, firmware, middleware, microcode, or a combination thereof. For hardware implementation, the processing unit can be implemented in one or more Application Specific Integrated Circuits (ASICs), Digital Signal Processing (DSP), Digital Signal Processing Equipment (DSP Device, DSPD), programmable Logic Device (PLD), Field-Programmable Gate Array (FPGA), general purpose processor, controller, microcontroller, microprocessor, other for performing the functions described herein In an electronic unit or a combination thereof.

For a software implementation, the techniques described herein can be implemented by modules (e.g., procedures, functions, and so on) that perform the functions described herein. The software code can be stored in memory and executed by the processor. The memory can be implemented in the processor or external to the processor.

According to the terminal device of present disclosure, a PDAP layer of the transmitted data is processed, so that the data does not carry a data transmission channel identifier corresponding to a corresponding data transmission channel in the PDAP layer, and the data is sent via the DRB corresponding to the corresponding data transmission channel, thereby reducing the additional attribute information related to the data in the transmitted data and saving the signaling overhead.

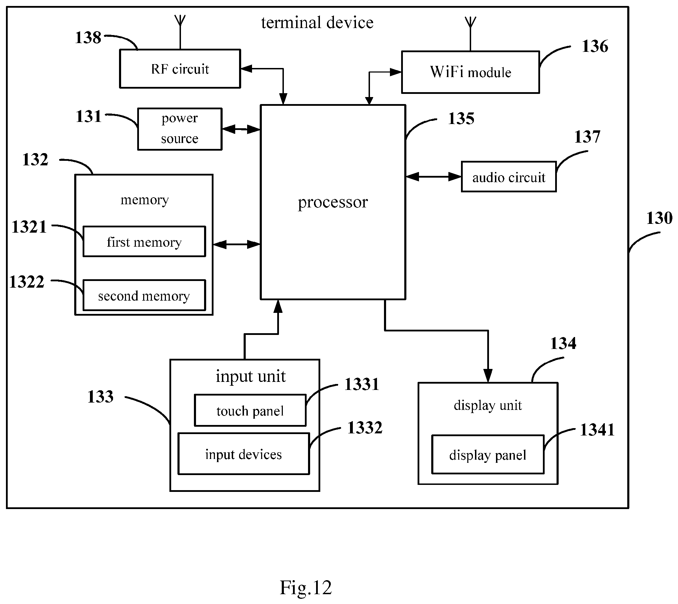

Fig.12 is a schematic view of a terminal device in some embodiments of the present disclosure. Specifically, the terminal device 130 in Fig.12 may be a mobile phone, a tablet computer, a personal digital assistant (PDA), or an in-vehicle computer or the like.

The terminal device 130 in Fig.12 includes a power source 131, a memory 132, an input unit 133, a display unit 134, a processor 135, a WIFI (Wireless Fidelity) module 136, an audio circuit 137, and an RF circuit 138.

The input unit 133 may be configured to receive information input by the user and generate signal input related to user settings and function control of the terminal device 112. Specifically, in some embodiments of the present disclosure, the input unit 133 may include a touch panel 1331. The touch panel 1331, also referred to as a touch screen, can collect touch operations on or near the user (such as the operation of the user using any suitable object or accessory such as a finger or a stylus on the touch panel 1331), and according to the preset. The programmed program drives the corresponding connection device. Optionally, the touch panel 1331 may include two parts: a touch detection device and a touch controller. The touch detection device detects the touch orientation of the user, and detects a signal brought by the touch operation, and transmits the signal to the touch controller; the touch controller receives the touch information from the touch detection device, converts the touch information into contact coordinates, and sends the touch information. The processor 135 is operative and can receive commands from the processor 135 and execute them. In addition, the touch panel 1331 can be implemented in various types such as resistive, capacitive, infrared, and surface acoustic waves. In addition to the touch panel 1331, the input unit 133 may further include other input devices 1332. The other input devices 1332 may include, but are not limited to, physical keyboards, function keys (such as volume control buttons, switch buttons, etc.), trackballs, mice, joysticks, and the like.

The display unit 134 can be used to display information input by the user or information provided to the user and various menu interfaces of the terminal device. The display unit 134 can include a display panel 1341. Alternatively, the display panel 1341 can be configured in the form of an LCD or an Organic Light-Emitting Diode (OLED).

It should be noted that the touch panel 1331 may cover the display panel 1341 to form a touch display screen, and when the touch display screen detects a touch operation on or near it, it is transmitted to the processor 135 to determine the type of the touch event, and then the processor 135 provides a corresponding visual output on the touch display depending on the type of touch event.

The touch display includes an application interface display area and a common control display area. The arrangement manner of the application interface display area and the display area of the common control is not limited, and the arrangement manner of the two display areas can be distinguished by up-and-down arrangement, left-right arrangement, and the like. The application interface display area can be used to display the interface of the application. Each interface can contain interface elements such as at least one application's icon and/or widget desktop control. The application interface display area can also be an empty interface that does not contain any content. The common control display area is used to display controls with high usage, such as setting buttons, interface numbers, scroll bars, phone book icons, and the like.

The processor 135 is a control center of the terminal device, and connects various parts of the entire mobile phone via various interfaces and lines, by running or executing software programs and/or modules stored in the first memory 1321, and calling the second memory. The data in 1322 performs various functions and processing data of the terminal device, thereby performing overall monitoring on the terminal device. Alternatively, processor 135 can include one or more processing units.

In some embodiments of the present disclosure, by calling a software program and/or module stored in the first memory 1321 and/or data in the second memory 1322, when the terminal device is a transmitting end device, the processor 135 is configured to:
acquire first data; process a PDAP layer of the first data, where the first data does not carry a first data transmission channel identifier corresponding to a first data transmission channel in the PDAP layer; and transmit the first data via a DRB corresponding to the first data transmission channel.

To be specific, the DRB corresponds to at least one data transmission channel, and the first data transmission channel is any one of the at least one data transmission channel.

To be specific, the processor 135 is further configured to: transmit, via the DRB, second data carrying a data transmission channel identifier corresponding to another data transmission channel, where the another data transmission channel is a data transmission channel other than the first data transmission channel of a plurality of data transmission channels corresponding to the DRB. The embodiment does not form part of the present invention but is an example useful for the understanding of the invention.

To be specific, the second data includes a signaling for reflective Quality-of-Service (QoS) information. The embodiment does not form part of the present invention but is an example useful for the understanding of the invention.

To be specific, in the case that the first data transmission channel identifier is in a PDAP layer header, the first data carries first indication information indicating that the first data does not carry the PDAP layer header, the embodiment does not form part of the present invention but is an example useful for the understanding of the invention; or in the case that the first data transmission channel identifier is not in a PDAP layer header, the first data carries second indication information indicating that the first data does not carry the first data transmission channel identifier or does not carry the PDAP layer header.

To be specific, in the case that the PDAP layer of the first data is processed, a header of the first data includes a first field configured to indicate that the first data is a data packet or a control packet.

To be specific, a first field of the header of the first data indicates that the first data is a data packet, and in the case that the PDAP layer of the first data is processed, the header of the first data includes a second field configured to indicate a length of the data transmission channel identifier corresponding to the data transmission channel, a format of the header of the first data and/or whether the header of the first data has an extended functional field.

To be specific, a first field of the header of the first data indicates that the first data is a data packet, and in the case that the PDAP layer of the first data is processed, the header of the first data includes a third field configured to indicate a length of a data domain filed of the first data.

To be specific, a first field of the header of the first data indicates that the first data is a control packet, and in the case that the PDAP layer of the first data is processed, the header of the first data includes a fourth field configured to indicate a control packet type of the first data and/or whether the header of the first data has an extended functional field.

To be specific, in the case that the PDAP layer of the first data is processed, the header of the first data includes a fifth field configured to indicate a coding mode of control information in the first data.

To be specific, the coding mode is coding from a low bit to a high bit of a signaling carrying the control information.

When the terminal device is a receiving end device, the processor 135 is configured to:
receive first data sent by a transmitting end device via a DRB corresponding to a first data transmission channel, where the first data does not carry a first data transmission channel identifier corresponding to the first data transmission channel in a PDAP layer.

To be specific, the processor 135 is further configured to: determine, based on pre-configured configuration information, a data transmission channel corresponding to the DRB via which the first data is sent.

To be specific, the DRB corresponds to at least one data transmission channel, and the first data transmission channel is any one of the at least one data transmission channel.

To be specific, the processor 135 is further configured to: receive second data sent by the transmitting end device via the DRB, where the second data carries a data transmission channel identifier corresponding to another data transmission channel in the PDAP layer, the another data transmission channel is a data transmission channel other than the first data transmission channel of a plurality of data transmission channels corresponding to the DRB; determine, based on the data transmission channel identifier carried in the second data, a data transmission channel corresponding to the DRB via which the second data is sent. The embodiment does not form part of the present invention but is an example useful for the understanding of the invention.

To be specific, the second data includes a signaling for reflective Quality-of-Service (QoS) information. The embodiment does not form part of the present invention but is an example useful for the understanding of the invention.

To be specific, in the case that the first data transmission channel identifier is in a PDAP layer header, the first data carries first indication information indicating that the first data does not carry the PDAP layer header, the embodiment does not form part of the present invention but is an example useful for the understanding of the invention; or in the case that the first data transmission channel identifier is not in a PDAP layer header, the first data carries second indication information indicating that the first data does not carry the first data transmission channel identifier or does not carry the PDAP layer header.

To be specific, a header of the first data includes a first field configured to indicate that the first data is a data packet or a control packet, and the processor 135 is further configured to:
determine, based on indication information in the first field, that the first data is a data packet or a control packet.

To be specific, in the case that the first data is a data packet, the header of the first data includes a second field configured to indicate a length of the data transmission channel identifier corresponding to the data transmission channel, a format of the header of the first data and/or whether the header of the first data has an extended functional field, and the processor 135 is further configured to:
determine, based on indication information in the second field, the length of the data transmission channel identifier corresponding to the data transmission channel, the format of the header of the first data and/or whether the header of the first data has the extended functional field.

To be specific, in the case that the first data is a data packet, the header of the first data includes a third field configured to indicate a length of a data domain filed of the first data, and the processor 135 is further configured to:
determine, based on indication information in the third field, the length of the data domain filed of the first data.

To be specific, in the case that the first data is a control packet, the header of the first data includes a fourth field configured to indicate a control packet type of the first data and/or whether the header of the first data has an extended functional field, and the processor 135 is further configured to:
determine, based on indication information in the fourth field, the control packet type of the first data and/or whether the header of the first data has the extended functional field.

To be specific, in the case that the header of the first data includes a fifth field configured to indicate a coding mode of control information in the first data, and the processor 135 is further configured to:
determine, based on indication information in the fifth field, the coding mode of the control information in the first data; and
read the control information in the first data based on the coding mode.

To be specific, the coding mode is coding from a low bit to a high bit of a signaling carrying the control information.

According to the terminal device of present disclosure, a PDAP layer of the transmitted data is processed, so that the data does not carry a data transmission channel identifier corresponding to a corresponding data transmission channel in the PDAP layer, and the data is sent via the DRB corresponding to the corresponding data transmission channel, thereby reducing the additional attribute information related to the data in the transmitted data and saving the signaling overhead.

Those of ordinary skill in the art will appreciate that the elements and algorithm steps of the various examples described in connection with the embodiments disclosed herein can be implemented in electronic hardware or a combination of computer software and electronic hardware. Whether these functions are performed in hardware or software depends on the specific application and design constraints of the solution. A person skilled in the art can use different methods to implement the described functions for each particular application, but such implementation should not be considered to be beyond the scope of the present disclosure.

A person skilled in the art can clearly understand that for the convenience and brevity of the description, the specific working process of the system, the device and the unit described above can refer to the corresponding process in the foregoing method embodiment, and details are not described herein again.

In the embodiments provided by the present disclosure, it should be understood that the disclosed apparatus and method may be implemented in other manners. For example, the device embodiments described above are merely illustrative. For example, the division of the unit is only a logical function division. In actual implementation, there may be another division manner, for example, multiple units or components may be combined or can be integrated into another system, or some features can be ignored or not executed. In addition, the mutual coupling or direct coupling or communication connection shown or discussed may be an indirect coupling or communication connection through some interface, device or unit, and may be in an electrical, mechanical or other form.

The units described as separate components may or may not be physically separated, and the components displayed as units may or may not be physical units, that is, may be located in one place, or may be distributed to multiple network units. Some or all of the units may be selected according to actual needs to achieve the purpose of the solution of the embodiment.

In addition, each functional unit in various embodiments of the present disclosure may be integrated into one processing unit, or each unit may exist physically separately, or two or more units may be integrated into one unit.

The functions may be stored in a computer readable storage medium if implemented in the form of a software functional unit and sold or used as a standalone product. Based on such understanding, a portion of the technical solution of the present disclosure that contributes in essence or to the related art or a part of the technical solution may be embodied in the form of a software product stored in a storage medium, including several The instructions are for causing a computer device (which may be a personal computer, server, or network side device, etc.) to perform all or part of the steps of the methods described in various embodiments of the present disclosure. The foregoing storage medium includes various media that can store program codes, such as a USB flash drive, a mobile hard disk, a ROM, a RAM, a magnetic disk, or an optical disk.

Moreover, it should be noted that in the apparatus and method of the present disclosure, it is apparent that the various components or steps may be decomposed and/or recombined. These decompositions and/or recombination should be considered as equivalents to the present disclosure. Also, the steps of performing the above-described series of processes may naturally be performed in chronological order in the order illustrated, but need not necessarily be performed in chronological order, and some steps may be performed in parallel or independently of each other. It will be appreciated by those skilled in the art that all or any of the steps or components of the methods and apparatus of the present disclosure may be in a network of any computing device (including a processor, storage medium, etc.) or computing device, in hardware, firmware The software, or a combination thereof, is implemented by those of ordinary skill in the art using their basic programming skills while reading the description of the present disclosure.

Thus, the objects of the present disclosure can also be achieved by running a program or a set of programs on any computing device. The computing device can be a well-known general purpose device. Accordingly, the objects of the present disclosure may also be realized by merely providing a program product including program code for implementing the method or apparatus. That is to say, such a program product also constitutes the present disclosure, and a storage medium storing such a program product also constitutes the present disclosure. It will be apparent that the storage medium may be any known storage medium or any storage medium developed in the future. It should also be noted that in the apparatus and method of the present disclosure, it is apparent that various components or steps may be decomposed and/or recombined. These decompositions and/or recombinations should be considered as equivalents to the present disclosure. Also, the steps of performing the series of processes described above may naturally be performed in chronological order in the order illustrated, but need not necessarily be performed in chronological order. Certain steps may be performed in parallel or independently of one another.

## Claims

1. A data transmission method performed by a transmitting end device, the method comprising:
acquiring first data (101);
processing (102) the first data on a Packet Data Adaption Protocol, PDAP, layer; and
transmitting (103) the first data via a Data Radio Bearer, DRB, corresponding to a first data transmission channel;
wherein the first data transmission channel is determined based on pre-configured configuration information;
the DRB corresponds to a plurality of data transmission channels, the first data transmission channel is any one of the plurality of data transmission channels, and the first data does not carry a first data transmission channel identifier corresponding to the first data transmission channel in the PDAP layer header;
wherein in the case that the PDAP layer of the first data is processed, a header of the first data comprises a first field configured to indicate that the first data is a data packet or a control packet;
**characterized in that** in the case that the first data transmission channel identifier is not in the PDAP layer header, the first data carries second indication information indicating that the first data does not carry the PDAP layer header.

2. The data transmission method according to claim 1, wherein in the case that the PDAP layer of the first data is processed, the header of the first data comprises a fifth field configured to indicate a coding mode of control information in the first data;
wherein the coding mode is coding from a low bit to a high bit of a signaling carrying the control information.

3. A data transmission method performed by a receiving end device, the method comprising:
receiving (801) first data sent by a transmitting end device via a Data Radio Bearer, DRB, corresponding to a first data transmission channel;
wherein the data transmission method further comprises: determining, based on pre-configured configuration information, a data transmission channel corresponding to the DRB via which the first data is sent;
the DRB corresponds to a plurality of data transmission channels, the first data transmission channel is any one of the plurality of data transmission channels, and the first data does not carry a first data transmission channel identifier corresponding to the first data transmission channel in a Packet Data Adaption Protocol, PDAP, layer header;
wherein a header of the first data comprises a first field configured to indicate that the first data is a data packet or a control packet, and the method further comprises: determining, based on indication information in the first field, that the first data is a data packet or a control packet;
**characterized in that** in the case that the first data transmission channel identifier is not in the PDAP layer header, the first data carries second indication information indicating that the first data does not carry the PDAP layer header.

4. The data transmission method according to claim 3, wherein in the case that the header of the first data comprises a fifth field configured to indicate a coding mode of control information in the first data, the method further comprises: determining, based on indication information in the fifth field, the coding mode of the control information in the first data; and reading the control information in the first data based on the coding mode;
wherein the coding mode is coding from a low bit to a high bit of a signaling carrying the control information.

5. A transmitting end device, comprising:
a first acquiring module (71), configured to acquire first data;
a first processing module (72), configured to process the first data on a Packet Data Adaption Protocol, PDAP, layer; and
a first sending module (73), configured to transmit the first data via a Data Radio Bearer, DRB, corresponding to a first data transmission channel;
wherein the first data transmission channel is determined based on pre-configured configuration information;
the DRB corresponds to a plurality of data transmission channels, the first data transmission channel is any one of the plurality of data transmission channels, and the first data does not carry a first data transmission channel identifier corresponding to the first data transmission channel in the PDAP layer header;
wherein in the case that the PDAP layer of the first data is processed, a header of the first data comprises a first field configured to indicate that the first data is a data packet or a control packet;
**characterized in that** in the case that the first data transmission channel identifier is not in the PDAP layer header, the first data carries second indication information indicating that the first data does not carry the PDAP layer header.

6. The transmitting end device according to claim 5, wherein
in the case that the PDAP layer of the first data is processed, the header of the first data comprises a fifth field configured to indicate a coding mode of control information in the first data;
wherein the coding mode is coding from a low bit to a high bit of a signaling carrying the control information

7. A receiving end device, comprising:
a first receiving module (91), configured to receive first data sent by a transmitting end device via a Data Radio Bearer, DRB, corresponding to a first data transmission channel;
wherein the receiving end device further comprises:
a first determining module, configured to determine, based on pre-configured configuration information, a data transmission channel corresponding to the DRB via which the first data is sent;
the DRB corresponds to a plurality of data transmission channels, the first data transmission channel is any one of the plurality of data transmission channels, and the first data does not carry a first data transmission channel identifier corresponding to the first data transmission channel in a Packet Data Adaption Protocol, PDAP, layer header;
wherein a header of the first data comprises a first field configured to indicate that the first data is a data packet or a control packet, and the device further comprises: a third determining module, configured to determine, based on indication information in the first field, that the first data is a data packet or a control packet;
**characterized in that** in the case that the first data transmission channel identifier is not in the PDAP layer header, the first data carries second indication information indicating that the first data does not carry the PDAP layer header.

8. The receiving end device according to claim 7, wherein
in the case that the header of the first data comprises a fifth field configured to indicate a coding mode of control information in the first data, the device further comprises: a seventh determining module, configured to determine, based on indication information in the fifth field, the coding mode of the control information in the first data; and a reading module, configured to read the control information in the first data based on the coding mode;
wherein the coding mode is coding from a low bit to a high bit of a signaling carrying the control information.

## Patentansprüche

1. Datenübertragungsverfahren, das von einer übertragungsseitigen Vorrichtung durchgeführt wird, wobei das Verfahren Folgendes umfasst:
Erfassen erster Daten (101);
Verarbeiten (102) der ersten Daten auf einer Paketdatenanpassungsprotokoll-, PDAP, -Schicht; und
Übertragen (103) der ersten Daten über einen Datenfunkträger, DRB, entsprechend einem ersten Datenübertragungskanal;
wobei der erste Datenübertragungskanal auf Grundlage vorkonfigurierter Konfigurationsinformationen bestimmt wird;
der DRB einer Vielzahl von Datenübertragungskanälen entspricht, der erste Datenübertragungskanal ein beliebiger der Vielzahl von Datenübertragungskanälen ist und die ersten Daten keine erste Datenübertragungskanalkennung entsprechend dem ersten Datenübertragungskanal in dem PDAP-Schicht-Header tragen;
wobei in dem Fall, dass die PDAP-Schicht der ersten Daten verarbeitet wird, ein Header der ersten Daten ein erstes Feld umfasst, das dazu konfiguriert ist, anzuzeigen, dass die ersten Daten ein Datenpaket oder ein Steuerpaket sind;
**dadurch gekennzeichnet, dass** in dem Fall, dass die erste Datenübertragungskanalkennung in dem PDAP-Schicht-Header nicht liegt, die ersten Daten zweite Anzeigeinformationen tragen, die anzeigen, dass die ersten Daten den PDAP-Schicht-Header nicht tragen.

2. Datenübertragungsverfahren nach Anspruch 1, wobei in dem Fall, dass die PDAP-Schicht der ersten Daten verarbeitet wird, der Header der ersten Daten ein fünftes Feld umfasst, das dazu konfiguriert ist, einen Codierungsmodus von Steuerinformationen in den ersten Daten anzuzeigen;
wobei der Codierungsmodus von einem niedrigen Bit zu einem hohen Bit einer Signalisierung codiert, die die Steuerinformationen trägt.

3. Datenübertragungsverfahren, das von einer empfangsseitigen Vorrichtung durchgeführt wird, wobei das Verfahren Folgendes umfasst:
Empfangen (801) erster Daten, die von einer übertragungsseitigen Vorrichtung über einen Datenfunkträger, DRB, entsprechend einem ersten Datenübertragungskanal gesendet werden;
wobei das Datenübertragungsverfahren ferner Folgendes umfasst: Bestimmen, auf Grundlage vorkonfigurierter Konfigurationsinformationen, eines Datenübertragungskanals entsprechend dem DRB, über den die ersten Daten gesendet werden;
der DRB einer Vielzahl von Datenübertragungskanälen entspricht, der erste Datenübertragungskanal ein beliebiger der Vielzahl von Datenübertragungskanälen ist und die ersten Daten keine erste Datenübertragungskanalkennung entsprechend dem ersten Datenübertragungskanal in einem Paketdatenanpassungsprotokoll-, PDAP, -Schicht-Header tragen;
wobei ein Header der ersten Daten ein erstes Feld umfasst, das dazu konfiguriert ist, anzuzeigen, dass die ersten Daten ein Datenpaket oder ein Steuerpaket sind, und das Verfahren ferner Folgendes umfasst: Bestimmen, auf Grundlage von Anzeigeinformationen in dem ersten Feld, dass die ersten Daten ein Datenpaket oder ein Steuerpaket sind;
**dadurch gekennzeichnet, dass** in dem Fall, dass die erste Datenübertragungskanalkennung in dem PDAP-Schicht-Header nicht liegt, die ersten Daten zweite Anzeigeinformationen tragen, die anzeigen, dass die ersten Daten den PDAP-Schicht-Header nicht tragen.

4. Datenübertragungsverfahren nach Anspruch 3, wobei in dem Fall, dass der Header der ersten Daten ein fünftes Feld umfasst, das dazu konfiguriert ist, einen Codierungsmodus von Steuerinformationen in den ersten Daten anzuzeigen, das Verfahren ferner Folgendes umfasst: Bestimmen, auf Grundlage von Anzeigeinformationen in dem fünften Feld, des Codierungsmodus der Steuerinformationen in den ersten Daten; und Lesen der Steuerinformationen in den ersten Daten auf Grundlage des Codierungsmodus;
wobei der Codierungsmodus von einem niedrigen Bit zu einem hohen Bit einer Signalisierung codiert, die die Steuerinformationen trägt.

5. Übertragungsseitige Vorrichtung, umfassend:
ein erstes Erfassungsmodul (71), das dazu konfiguriert ist, erste Daten zu erfassen;
ein erstes Verarbeitungsmodul (72), das dazu konfiguriert ist, die ersten Daten auf einer Paketdatenanpassungsprotokoll-, PDAP,-Schicht zu verarbeiten; und
ein erstes Sendemodul (73), das dazu konfiguriert ist, die ersten Daten über einen Datenfunkträger, DRB, entsprechend einem ersten Datenübertragungskanal zu übertragen;
wobei der erste Datenübertragungskanal auf Grundlage vorkonfigurierter Konfigurationsinformationen bestimmt wird;
der DRB einer Vielzahl von Datenübertragungskanälen entspricht, der erste Datenübertragungskanal ein beliebiger der Vielzahl von Datenübertragungskanälen ist und die ersten Daten keine erste Datenübertragungskanalkennung entsprechend dem ersten Datenübertragungskanal in dem PDAP-Schicht-Header tragen;
wobei in dem Fall, dass die PDAP-Schicht der ersten Daten verarbeitet wird, ein Header der ersten Daten ein erstes Feld umfasst, das dazu konfiguriert ist, anzuzeigen, dass die ersten Daten ein Datenpaket oder ein Steuerpaket sind;
**dadurch gekennzeichnet, dass** in dem Fall, dass die erste Datenübertragungskanalkennung in dem PDAP-Schicht-Header nicht liegt, die ersten Daten zweite Anzeigeinformationen tragen, die anzeigen, dass die ersten Daten den PDAP-Schicht-Header nicht tragen.

6. Übertragungsseitige Vorrichtung nach Anspruch 5, wobei
in dem Fall, dass die PDAP-Schicht der ersten Daten verarbeitet wird, der Header der ersten Daten ein fünftes Feld umfasst, das dazu konfiguriert ist, einen Codierungsmodus von Steuerinformationen in den ersten Daten anzuzeigen;
wobei der Codierungsmodus von einem niedrigen Bit zu einem hohen Bit einer Signalisierung codiert, die die Steuerinformationen trägt.

7. Empfangsseitige Vorrichtung, umfassend:
ein erstes Empfangsmodul (91), das dazu konfiguriert ist, erste Daten zu empfangen, die von einer übertragungsseitigen Vorrichtung über einen Datenfunkträger, DRB, entsprechend einem ersten Datenübertragungskanal gesendet werden;
wobei die empfangsseitige Vorrichtung ferner Folgendes umfasst:
ein erstes Bestimmungsmodul, das dazu konfiguriert ist, auf Grundlage vorkonfigurierter Konfigurationsinformationen, einen Datenübertragungskanal entsprechend dem DRB zu bestimmen, über den die ersten Daten gesendet werden;
der DRB einer Vielzahl von Datenübertragungskanälen entspricht, der erste Datenübertragungskanal ein beliebiger der Vielzahl von Datenübertragungskanälen ist und die ersten Daten keine erste Datenübertragungskanalkennung entsprechend dem ersten Datenübertragungskanal in einem Paketdatenanpassungsprotokoll-, PDAP, -Schicht-Header tragen;
wobei ein Header der ersten Daten ein erstes Feld umfasst, das dazu konfiguriert ist, anzuzeigen, dass die ersten Daten ein Datenpaket oder ein Steuerpaket sind, und die Vorrichtung ferner Folgendes umfasst:
ein drittes Bestimmungsmodul, das dazu konfiguriert ist, auf Grundlage von Anzeigeinformationen in dem ersten Feld zu bestimmen, dass die ersten Daten ein Datenpaket oder ein Steuerpaket sind;
**dadurch gekennzeichnet, dass** in dem Fall, dass die erste Datenübertragungskanalkennung in dem PDAP-Schicht-Header nicht liegt, die ersten Daten zweite Anzeigeinformationen tragen, die anzeigen, dass die ersten Daten den PDAP-Schicht-Header nicht tragen.

8. Empfangsseitige Vorrichtung nach Anspruch 7, wobei in dem Fall, dass der Header der ersten Daten ein fünftes Feld umfasst, das dazu konfiguriert ist, einen Codierungsmodus von Steuerinformationen in den ersten Daten anzuzeigen, die Vorrichtung ferner Folgendes umfasst: ein siebtes Bestimmungsmodul, das dazu konfiguriert ist, auf Grundlage von Anzeigeinformationen in dem fünften Feld, den Codierungsmodus der Steuerinformationen in den ersten Daten zu bestimmen; und ein Lesemodul, das dazu konfiguriert ist, die Steuerinformationen in den ersten Daten auf Grundlage des Codierungsmodus zu lesen;
wobei der Codierungsmodus von einem niedrigen Bit zu einem hohen Bit einer Signalisierung codiert, die die Steuerinformationen trägt.

## Revendications

1. Procédé de transmission de données exécuté par un dispositif côté transmission, le procédé comprenant :
acquérir des premières données (101) ;
traiter (102) les premières données sur une couche du protocole d'adaptation des données par paquets, PDAP ; et
transmettre (103) les premières données via un support radio de données, DRB, correspondant à un premier canal de transmission de données ;
dans lequel le premier canal de transmission de données est déterminé sur la base d'informations de configuration préconfigurées ;
le DRB correspond à une pluralité de canaux de transmission de données, le premier canal de transmission de données est l'un quelconque de la pluralité de canaux de transmission de données, et les premières données ne transportent pas d'identifiant de premier canal de transmission de données correspondant au premier canal de transmission de données dans l'en-tête de couche PDAP ;
dans lequel, dans le cas où la couche PDAP des premières données est traitée, un en-tête des premières données comprend un premier champ configuré pour indiquer que les premières données sont un paquet de données ou un paquet de commande ;
**caractérisé en ce que**, dans le cas où le premier identifiant de canal de transmission de données n'est pas dans l'en-tête de couche PDAP, les premières données transportent des secondes informations d'indication indiquant que les premières données ne transportent pas l'en-tête de couche PDAP.

2. Procédé de transmission de données selon la revendication 1, dans lequel, dans le cas où la couche PDAP des premières données est traitée, l'en-tête des premières données comprend un cinquième champ configuré pour indiquer un mode de codage des informations de commande dans les premières données ;
dans lequel le mode de codage consiste à coder d'un bit bas à un bit haut une signalisation transportant les informations de commande.

3. Procédé de transmission de données mis en œuvre par un dispositif côté réception, le procédé comprenant :
recevoir (801) des premières données envoyées par un dispositif côté transmission via un support radio de données, DRB, correspondant à un premier canal de transmission de données ;
dans lequel le procédé de transmission de données comprend en outre : déterminer, sur la base d'informations de configuration préconfigurées, un canal de transmission de données correspondant au DRB via lequel les premières données sont envoyées ;
le DRB correspond à une pluralité de canaux de transmission de données, le premier canal de transmission de données est l'un quelconque de la pluralité de canaux de transmission de données, et les premières données ne transportent pas d'identifiant de premier canal de transmission de données correspondant au premier canal de transmission de données dans un en-tête de couche de protocole d'adaptation de données par paquets, PDAP ;
dans lequel un en-tête des premières données comprend un premier champ configuré pour indiquer que les premières données sont un paquet de données ou un paquet de commande, et le procédé comprend en outre : déterminer, sur la base des informations d'indication dans le premier champ, que les premières données sont un paquet de données ou un paquet de commande ;
**caractérisé en ce que**, dans le cas où le premier identifiant de canal de transmission de données n'est pas dans l'en-tête de couche PDAP, les premières données transportent des secondes informations d'indication indiquant que les premières données ne transportent pas l'en-tête de couche PDAP.

4. Procédé de transmission de données selon la revendication 3, dans lequel, dans le cas où l'en-tête des premières données comprend un cinquième champ configuré pour indiquer un mode de codage des informations de commande dans les premières données, le procédé comprend en outre : déterminer, sur la base des informations d'indication dans le cinquième champ, le mode de codage des informations de commande dans les premières données ; et lire les informations de commande dans les premières données sur la base du mode de codage ;
dans lequel le mode de codage consiste à coder d'un bit bas à un bit haut une signalisation transportant les informations de commande.

5. Dispositif côté transmission, comprenant :
un premier module d'acquisition (71), configuré pour acquérir des premières données ;
un premier module de traitement (72), configuré pour traiter les premières données sur une couche de protocole d'adaptation des données par paquets, PDAP ; et
un premier module d'envoi (73), configuré pour transmettre les premières données via un support radio de données, DRB, correspondant à un premier canal de transmission de données ;
dans lequel le premier canal de transmission de données est déterminé sur la base d'informations de configuration préconfigurées ;
le DRB correspond à une pluralité de canaux de transmission de données, le premier canal de transmission de données est l'un quelconque de la pluralité de canaux de transmission de données, et les premières données ne transportent pas d'identifiant de premier canal de transmission de données correspondant au premier canal de transmission de données dans l'en-tête de couche PDAP ;
dans lequel, dans le cas où la couche PDAP des premières données est traitée, un en-tête des premières données comprend un premier champ configuré pour indiquer que les premières données sont un paquet de données ou un paquet de commande ;
**caractérisé en ce que**, dans le cas où le premier identifiant de canal de transmission de données n'est pas dans l'en-tête de couche PDAP, les premières données transportent des secondes informations d'indication indiquant que les premières données ne transportent pas l'en-tête de couche PDAP.

6. Dispositif côté transmission selon la revendication 5, dans lequel
dans le cas où la couche PDAP des premières données est traitée, l'en-tête des premières données comprend un cinquième champ configuré pour indiquer un mode de codage des informations de commande dans les premières données ;
dans lequel le mode de codage consiste à coder d'un bit bas à un bit haut une signalisation transportant les informations de commande.

7. Dispositif côté réception, comprenant :
un premier module de réception (91), configuré pour recevoir des premières données envoyées par un dispositif côté transmission via un support de données radio, DRB, correspondant à un premier canal de transmission de données ;
dans lequel le dispositif côté réception comprend en outre :
un premier module de détermination, configuré pour déterminer, sur la base d'informations de configuration préconfigurées, un canal de transmission de données correspondant au DRB via lequel les premières données sont envoyées ;
le DRB correspond à une pluralité de canaux de transmission de données, le premier canal de transmission de données est l'un quelconque de la pluralité de canaux de transmission de données, et les premières données ne transportent pas d'identifiant de premier canal de transmission de données correspondant au premier canal de transmission de données dans un en-tête de couche de protocole d'adaptation de données par paquets, PDAP ;
dans lequel un en-tête des premières données comprend un premier champ configuré pour indiquer que les premières données sont un paquet de données ou un paquet de commande, et le dispositif comprend en outre :
un troisième module de détermination, configuré pour déterminer, sur la base des informations d'indication dans le premier champ, que les premières données sont un paquet de données ou un paquet de commande ;
**caractérisé en ce que**, dans le cas où le premier identifiant de canal de transmission de données n'est pas dans l'en-tête de couche PDAP, les premières données transportent des secondes informations d'indication indiquant que les premières données ne transportent pas l'en-tête de couche PDAP.

8. Dispositif côté réception selon la revendication 7, dans lequel
dans le cas où l'en-tête des premières données comprend un cinquième champ configuré pour indiquer un mode de codage des informations de commande dans les premières données, le dispositif comprend en outre : un septième module de détermination, configuré pour déterminer, sur la base des informations d'indication dans le cinquième champ, le mode de codage des informations de commande dans les premières données ; et un module de lecture, configuré pour lire les informations de commande dans les premières données sur la base du mode de codage ;
dans lequel le mode de codage consiste à coder d'un bit bas à un bit haut une signalisation transportant les informations de commande.
